# EUROPÄISCHE PATENTSCHRIFT

(11) **EP 3 442 776 B1**
(45) Veröffentlichungstag und Bekanntmachung des Hinweises auf die Patenterteilung: **08.12.2021**
(21) Anmeldenummer: 17722380.7
(22) Anmeldetag: 12.04.2017
(51) Int. Cl.: B29C 65/02, B29C 48/08, B31B 70/64, B31B 70/74, C08G 77/458, B29L 31/00, B29K 705/02

(54) **VERFAHREN ZUR HERSTELLUNG EINES BEUTELS MIT ANTIHAFTSCHICHT UND BEUTEL MIT ANTIHAFTSCHICHT**
METHOD OF MANUFACTURING A BAG EQUIPPED WITH AN ANTISTICKING LAYER AND BAG HAVING AN ANTISTICKING LAYER
PROCÉDÉ DE FABRICATION D'UN SAC PRÉSENTANT UNE COUCHE ANTI-ADHÉSIVE ET SAC COMPRENANT UNE COUCHE ANTI-ADHÉSIVE

(30) Priorität: 15.04.2016 EP 16165695
(43) Veröffentlichungstag der Anmeldung: 20.02.2019
(73) Patentinhaber: Jura-Plast GmbH, 91244 Reichenschwand (DE)
(72) Erfinder: MÜLLER, Herbert Jürgen, 91230 Happurg/Förrenbach (DE)
(74) Vertreter: Simandi, Claus
(86) Internationale Anmeldenummer: PCT/EP2017/058719
(87) Internationale Veröffentlichungsnummer: WO 2017/178505

(56) Entgegenhaltungen:
- EP-A1- 1 505 101
- EP-A1- 2 594 396
- DE-U1-202004 003 344
- DE-U1-202004 003 344
- JP-A- 2014 177 541

## Beschreibung

Die vorliegende Erfindung betrifft die Herstellung von Kunststoffbeuteln, insbesondere mittels eines Kunststoff-Schweißverfahrens.
Insbesondere betrifft die vorliegende Erfindung die Herstellung von Kunststoffbeuteln, die mit einer Antihaftschicht ausgestattet sind, mittels eines Schweißverfahrens.

Der Ausdruck "Beutel" wird hier stellvertretend für alle beutelförmigen Verpackungen aus Kunststoff verwendet, wie Plastiktüten, Tragetaschen, sackförmige Verpackungen etc.

Die Innenseite von Kunststoffbeuteln ist häufig mit einer Antihaftschicht versehen, um ein Anhaften von klebrigen, pastösen Verpackungsgütern zu verhindern und deren Entnahme aus dem Beutel zu erleichtern.

Für die Herstellung von Kunststoffbeuteln werden Folien aus thermoplastischen Kunststoffen produziert, zwei Folienabschnitte übereinandergelegt und die Seitenränder und gegebenenfalls der untere Rand miteinander verschweißt.

Typische thermoplastische Kunststoffe für die Herstellung von Beuteln sind Polyolefine wie Polyethylen (PE), Polypropylen (PP), Polyamide (PA), Polyethylenterephthalate (PET) etc.

Um ein Anhaften des Verpackungsgutes an die Folie zu verhindern, wird die Innenfläche des Beutels üblicherweise mit einer Antihaftbeschichtung, zum Beispiel aus Polydiorgarnosiloxanen (nachfolgend auch als Silikon bezeichnet) wie Polydimethylsiloxan ausgerüstet.

Das Silikon wird dabei in flüssiger Form auf die Trägerfolie aufgetragen und ausgehärtet, wobei sich eine fest an der Trägerfolie anhaftende Beschichtung ausbildet.

JP 2014 177541 A beschreibt ein Verfahren zur Herstellung einer beutelförmigen Verpackung aus einer Folie mit einer Antihaftschicht mittels Schweißen, wobei die Antihaftschicht aus einem Kunststoff auf Basis eines Polydiorganosiloxans mit Polyolefinblöcken ausgebildet ist, jedoch werden keine harten Blöcke offenbart, die aus Polyamid, Polyester, Polycarbonat, Polyurethan, Polycaprolacton, Polyharnstoff, Polycarbonat, Polystyrol, Polysulfon, Novolak und Copolymeren davon bestehen.

EP 2 594 396 A1 offenbart eine Folie mit Antihaftschicht, die mit einem Metall kaschiert wird.

EP 1 505 101 A1 beschreibt einen schweißbaren Kunststoff auf Basis von Polydiorganosiloxan in Form einer Elastomerlegierung, in der ein Polydiorganosiloxan fein verteilt in einer Matrix aus einem thermoplastischen Kunststoff vorliegt.

DE 20 2004 003344 U1 beschreibt eine Mehrschichtfolie mit zwei oder mehreren Schichten, wobei eine Seite eine Antihaftschicht aus einem Kunststoff auf Basis von Polydiorganosiloxan ist.

Von Nachteil ist dabei, dass Polydiorganosiloxane als Elastomere anders als thermoplastische Kunststoffe nicht schweißbar sind.
Daher wird heutzutage zunächst die Trägerfolie produziert und in einem zweiten Arbeitsgang eine Seite der Folie mit der Antihaftbeschichtung aus Polydiorganosiloxan versehen. Da das Polydiorganosiloxan nicht schweißbar ist, wird die Folie auf der unbeschichteten Gegenseite zu einem Beutel verschweißt. Anschließend muss der Beutel umgestülpt werden, damit die beschichtete Seite innen zu liegen kommt, was zumeist noch händisch erfolgt.
Dieser Herstellungsprozess ist fertigungstechnisch ausgesprochen aufwändig.

Weitere Nachteile neben der aufwändigen Fertigung sind, dass die überstehenden Nähte des Beutels in das Beutelinnere hineinragen, und die Fertigungsqualität der Beschichtung mit dem Silikonmaterial nicht konstant ist. Zudem ist eine große Immissionsbelastung durch silikonhaltige Abluft gegeben.

Es war daher Aufgabe der vorliegenden Erfindung ein vereinfachtes Verfahren zur Herstellung von mit einer Antihaftbeschichtung versehenen Kunststoffbeuteln bereitzustellen, wobei insbesondere der aufwändige Umstülpvorgang vermieden werden soll.

Erfindungsgemäß wird diese Aufgabe gelöst, indem für die Herstellung einer Antihaftbeschichtung für einen beutelförmige Verpackung ein Kunststoff auf Basis eins Polydiorganosiloxans verwendet wird, der schweißbar ist.

Die vorliegende Erfindung betrifft ein Verfahren zur Herstellung einer beutelförmigen Verpackung aus einer Folie mit einer Antihaftschicht nach Anspruch 1.

Weiter betrifft die vorliegende Erfindung eine beutelförmige Verpackung nach Anspruch 8.

Gemäß einem weiteren Aspekt betrifft die vorliegende Erfindung die Verwendung eines schweißbaren Kunststoffes auf Polydiorganosiloxanbasis mit Antihaftwirkung als Antihaftschicht für eine beutelförmige Verpackung nach Anspruch 9.

Da für die vorliegende Erfindung als Antihaftschicht ein schweißbarer Kunststoff auf Polydiorganosiloxanbasis verwendet wird, kann die Folie unmittelbar auf der "richtigen" Seite zu einem Beutel verschweißt werden, sodass ein aufwändiges Umstülpen nicht mehr erforderlich ist.

Die schweißbare Antihaftschicht lässt sich mittels herkömmlicher Schweiß- und Siegelverfahren direkt verarbeiten.

Zudem lassen sich die schweißbaren Kunststoffe auf Silikonbasis auch ohne Weiteres durch herkömmliche Extrusionsverfahren einschließlich Blasfolienextrusion und Castfolienextrusion verarbeiten. Das heißt die Folie mit Antihaftschicht kann in einem einzigen Arbeitsgang durch Extrusion erhalten werden, sodass auch das nachträgliche Aufbringen der Antihaftschicht entfällt.

Die Folie kann eine Einschichtfolie oder eine co-extrudierte Mehrschichtfolie aus zwei oder mehreren Folienlagen sein. Die weiteren Folienlagen können aus anderen Kunststoffmaterialien hergestellt sein.

Die weiteren Folienlagen können funktionale Schichten mit bestimmten Funktionen sein, zum Beispiel eine Barriereschicht gegen Gase oder Wasserdampf, eine Schicht zur Haftvermittlung zwischen unverträglichen Polymeren, zur Beeinflussung der Folienmechanik, der Stabilität etc.

Die Folie kann beidseitig mit einer Antihaftschicht versehen sein.

Die schweißbare Folie mit Antihaftschicht beziehungsweise die schweißbare Antihaftschicht lässt sich mittels herkömmlicher Methode verarbeiten. Sie kann bei Bedarf veredelt werden, zum Beispiel bedruckt oder mit Folien aus anderen Materialien (anderen Kunststoffen, Papier, Metallen wie Aluminium etc.) kaschiert werden. Diese Veredelung beeinträchtigt die Schweißbarkeit beziehungsweise Siegelfähigkeit der schweißbaren Antihaftschicht nicht, so dass diese auch im Anschluss an die Veredelung noch schweißbar ist.

Ein weiteres Beispiel für eine Verwendungsmöglichkeit einer Folie mit schweißbarer Antihaftschicht ist der Einsatz als Flachfolie auf sogenannten FFS-Anlagen (Form-Fill-Seal) bei der erst beim Verpacken die Folie zu Beuteln, Tüten unterschiedlichster Form, Format und Aufbau verarbeitet wird.

Je nach Bedarf können Additive und/oder Füllstoffe zugesetzt werden wie sie in der kunststoffverarbeitenden Industrie bekannt und üblich sind.

Beispiele für gebräuchliche Füllstoffe sind Quarzmehl, Kreide, Glimmer, Aluminiumoxidhydrate, pyrogene und gefällte Kieselsäuren und Silikat-Aerogele. Beispiele für gebräuchliche Additive sind Farbstoffe, Pigmente, Antiblockmittel und Antifogging-Mittel. Beispiele für Pigmente sind Titandioxid, Calciumcarbonat und Siliciumdioxid, die der Folie einem perlmuttartigen Glanz verleihen.

Die Hilfsstoffe können auch als Masterbatches zugesetzt werden, zum Beispiel als Füllstoffmasterbatch oder Farbmasterbatch.

Prinzipiell kann für die vorliegende Erfindung jedes schweißbare Polymer oder Copolymer auf Basis von Polydiorganosiloxan eingesetzt werden, das Antihaftwirkung aufweist. Beispiele hierfür sind insbesondere thermoplastische Polydiorganosiloxan-Copolymere und thermoplastische Elastomere auf Basis von Polydiorganosiloxan.

Es können die an sich bekannten Blockcopolymere mit weichen unpolaren Polydiorganosiloxanblock und einem oder mehreren harten polaren Polymerblöcken verwendet werden.

Als Polymere für die harten Polymerblöcke sind thermoplastische Kunststoffe geeignet.

Harte Polymerblöcke sind Polyamid, Polyester, Polyurethan, Polyharnstoff, Novolak, Polycarbonat, Polystyrol, Polycaprolacton, Polysulfon.

Der weiche Polymerblock kann zusätzlich zu Polydiorganosiloxan noch einen oder mehrere andere weiche Polymerblöcke aufweisen. Beispiele hierfür sind Polyalkylenoxid, Polyolefin, Polydien oder Polyfluorkohlenstoff.

Beispielsweise kann der weiche Polymerblock ein Di- oder Triblockcopolymer mit Polydiorganosiloxan und Polyethylenoxid oder Polypropylenoxid sein.

Bevorzugte weiche Blöcke sind Polydimethylsiloxan, Polydialkylsiloxan, Polyfluoralkyl-Alkylsiloxan, Polydiarylsiloxan und Polyaryl-Alkyl-Siloxan.

Die Organogruppen der Siliziumatome des Polydiorganosiloxanblocks können gleich oder verschieden sein. Sie können ausgewählt sein unter einem linearen oder verzweigten Alkyl mit C₁-C₁₈, einen Cycloalkyl, Alkenyl, Aryl, Arakyl, einem halogenierten Alkyl, einem halogenierten Aryl und einem halogenierten Alkyl.

Die Anzahl der Wiederholungseinheiten in dem weichen Block kann in einem weiten Umfang variieren und kann beispielsweise zwischen 1 und etwa 4000 betragen, vorzugsweise beträgt sie mindestens 3 und insbesondere bevorzugt mindestens 5 und vorzugsweise höchstens 1500 und insbesondere bevorzugt höchstens 600 Wiederholungseinheiten.
Die Anzahl der Wiederholungseinheiten in den harten Blöcken ist typischerweise geringer als die der Wiederholungseinheiten in den weichen Blöcke und kann 1 bis 10 Wiederholungseinheiten betragen, wobei die Anzahl der Wiederholungseinheiten in den harten Blöcke üblicherweise gleich oder kleiner ist als die Anzahl der Wiederholungseinheiten in den weichen Blöcken.

Das Blockcopolymer kann verschiedene harte Blöcke aufweisen, zum Beispiel einen ersten Block aus einem ersten harten Polymer und einen zweiten Block aus einem zweiten harten Polymer.

Geeignete Beispiele für Blockcopolymere mit weichen Polydiorganosiloxanblöcken und Verfahren zu deren Herstellung sind zum Beispiel in WO 91/15538 A1 (ALLLIED-SIGNAL INC.), WO 96/0340029 (korrespondierend zu EP 0 822 951 B1; Minisota Mining and Manufacturing Company) und DE 10 2004 062 354 A1 (Wacker Chemie AG) beschrieben.

Ein Verfahren zur Herstellung von Polydiorganosiloxan/Polyharnstoff-Blockcopolymeren ist zum Beispiel in I. Yilgör, Polymer, 1984 (25), 1800 beschrieben. Danach werden mittels einer an sich bekannten Polyadditionsreaktion α,ω- Bis(Aminoalkyl)polydimethylsiloxanoligomere mit gängigen Diisocyanaten als harten Blöcken umgesetzt. In analoger Weise können Polydiorganosiloxan/Polyurethan-Blockcopolymere oder Polydiorganosiloxan/Polyharnstoff/Polyurethan-Blockcopolymere erhalten werden.

Ein weiteres geeignetes Material für die vorliegende Erfindung ist eine Elastomerlegierung mit einer mikroheterogenen Phasenverteilung eines Silikonelastomers in einem thermoplastischen Kunststoffmaterial. Prinzipiell kann hierfür jedes bekannte Silikonelastomer eingesetzt werden. Vorteilhafterweise ist der Gewichtsanteil an Silikonelastomer geringer als der des thermoplastischen Kunststoffmaterials. Beispiele für geeignete thermoplastische Materialien sind die vorstehend genannten Materialien für die harten Blöcke.

Die vorliegende Erfindung ermöglicht eine signifikante Vereinfachung der Herstellung von beutelförmigen Verpackungen mit einer Schicht mit Antihaftwirkung auf Basis von Polydiorganosiloxanen mittels herkömmliches Schweiß-/Siegeltechniken. Es lassen sich ohne weiteres durch ein herkömmliche Coextrusionsverfahren Mehrschichtfolien erhalten, die zusätzlich zu der Antihaftschicht an Anforderungsprofile in Hinblick auf die Mechanik, Permeation, Stabilität etc. angepasst werden können.

## Patentansprüche

1. Verfahren zur Herstellung einer beutelförmigen Verpackung aus einer Folie mit einer Antihaftschicht, wobei die Antihaftschicht aus einem Kunststoff auf Polydiorganosiloxanbasis gebildet ist, der schweißbar ist,
**wobei** in einem ersten Schritt die Folie mit Antihaftschicht erzeugt wird und in einem zweiten Schritt die Folie durch Verschweißen oder Versiegeln auf der Seite mit der Antihaftschicht zu der beutelförmigen Verpackung verarbeitet wird,
**wobei** der Kunststoff auf Polydiorganosiloxanbasis ein Blockcopolymer ist mit einem oder mehreren Blöcken aus Polydiorganosiloxan und einem oder mehreren Blöcken aus einem harten Polymer, das ausgewählt ist unter einem thermoplastischen Kunststoff, und
**dadurch gekennzeichnet, dass** der harte Block ausgewählt ist unter Polyamid, Polyester, Polycarbonat, Polyurethan, Polycaprolacton, Polyharnstoff, Polycarbonat, Polystyrol, Polysulfon, Novolak und Copolymeren davon.

2. Verfahren nach Anspruch 1,
**wobei** die Folie mit Antihaftschicht durch Extrusion erhalten wird.

3. Verfahren nach Anspruch 1 oder 2,
**wobei** die Folie eine Mehrschichtfolie mit zwei oder mehreren Schichten ist,
**wobei** eine Seite eine Antihaftschicht aus einem Kunststoff auf Polydiorganosiloxanbasis ist.

4. Verfahren nach einem der Ansprüche einem der vorhergehenden Ansprüchen,
**wobei** der schweißbare Kunststoff auf Polydiorganosiloxanbasis eine Elastomerlegierung ist, in das Polydiorganosiloxan fein verteilt in einer Matrix aus einem thermoplastischen Kunststoff vorliegt.

5. Verfahren nach einem der vorhergehenden Ansprüche,
**wobei** die Folie mit Antihaftschicht mit einem Nichtkunststoffmaterial kaschiert wird.

6. Verfahren nach Anspruch 5, **wobei** das Nichtkunststoffmaterial eine Folie aus Papier, Pappe oder einem Metall ist.

7. Verfahren nach einem der vorhergehenden Ansprüche,
**wobei** das Blockcopolymer mindestens einen Kettenerweiterer aufweist.

8. Beutelförmige Verpackung erhältlich nach einem Verfahren nach einem der Ansprüche 1 bis 7,
**wobei** die Innenseite der beutelförmigen Verpackung eine Antihaftwirkung hat und aus einem schweißbaren Kunststoff auf Basis von Polydiorganosiloxan gebildet ist,
**wobei** die beutelförmige Verpackung gebildet ist durch Verschweißen auf der Innenseite mit der Antihaftschicht.

9. Verwendung eines Kunststoffs auf Basis von Polydiorganosiloxan, der verschweißbar ist, für die Herstellung einer beutelförmigen Verpackung mittels Verschweißen oder Versiegelns,
**wobei** der Kunststoff auf Polydiorganosiloxanbasis ein Blockcopolymer ist mit einem oder mehreren Blöcken aus Polydiorganosiloxan und einem oder mehreren Blöcken aus einem harten Polymer, das ausgewählt ist unter einem thermoplastischen Kunststoff, und
**dadurch gekennzeichnet, dass** der harte Block ausgewählt ist unter Polyamid, Polyester, Polycarbonat, Polyurethan, Polycaprolacton, Polyharristoff, Polycarbonat, Polystyrol, Polysulfon, Novolak und Copolymeren davon.

## Claims

1. A method for producing a bag-shaped package made of a film having an anti-adhesion layer, wherein the anti-adhesion layer is formed from a plastic based on polydiorganosiloxane which is weldable,
**wherein** in a first step the film with anti-adhesion layer is produced and in a second step the film is processed by welding or sealing on the side having the anti-adhesion layer to form the bag-shaped package,
**wherein** the plastic based on polydiorganosiloxane is a block copolymer with one or more blocks formed from polydiorganosiloxane and one or more blocks formed from a hard polymer selected from a thermoplastic,
**characterized in that** the hard block is selected from polyamide, polyester, polycarbonate, polyurethane, polycaprolactone, polyurea, polycarbonate, polystyrene, polysulfone, novolak and copolymers thereof.

2. The method according to claim 1,
**wherein** the film with anti-adhesion layer is obtained by extrusion.

3. The method according to claim 1 or 2,
**wherein** the film is a multilayer film having two or more layers, **wherein** one side is an anti-adhesion layer made of a plastic based on polydiorganosiloxane.

4. The method according to any one of the preceding claims,
**wherein** the weldable plastic based on polydiorganosiloxane is an elastomer alloy, in which polydiorganosiloxane is finely distributed in a matrix formed from a thermoplastic.

5. The method according to any one of the preceding claims,
**wherein** the film with anti-adhesion layer is laminated with a non-plastic material.

6. The method according to claim 5, **wherein** the non-plastic material is a film made of paper, cardboard or a metal.

7. The method according to any one of the preceding claims,
**wherein** the block copolymer comprises at least one chain extender.

8. A bag-shaped package obtainable by a method according to any one of claims 1 to 7,
**wherein** the inner side of the bag-shaped package has anti-adhesion properties and is formed from a weldable plastic based on polydiorganosiloxane,
**wherein** the bag-shaped package is formed by welding on the inner side with the anti-adhesion layer.

9. Use of a plastic based on polydiorganosiloxane which is weldable for the production of a bag-shaped package by means of welding or sealing,
**wherein** the plastic based on polydiorganosiloxane is a block copolymer with one or more blocks formed from polydiorganosiloxane and one or more blocks formed from a hard polymer selected from a thermoplastic,
**characterized in that** the hard block is selected from polyamide, polyester, polycarbonate, polyurethane, polycaprolactone, polyurea, polycarbonate, polystyrene, polysulfone, novolak and copolymers thereof.

## Revendications

1. Procédé de production d'un emballage en forme de sac constitué d'un film ayant une couche anti-adhésion, dans lequel la couche anti-adhésion est formée d'une matière plastique à base de polydiorganosiloxane qui est soudable,
**dans lequel,** dans une première étape, le film avec une couche anti-adhésion est produit et, dans une seconde étape, le film est traité par soudage ou scellement sur le côté ayant la couche anti-adhésion pour former l'emballage en forme de sac,
**dans lequel** le plastique à base de polydiorganosiloxane est un copolymère séquencé avec un ou plusieurs blocs formés de polydiorganosiloxane et un ou plusieurs blocs formés d'un polymère dur choisi parmi les thermoplastiques,
**caractérisé en ce que** le bloc dur est choisi parmi le polyamide, le polyester, le polycarbonate, le polyuréthane, le polycaprolactone, la polyurée, le polycarbonate, le polystyrène, le polysulfone, la novolaque et leurs copolymères.

2. Méthode selon la revendication 1,
**dans lequel** le film avec couche anti-adhésion est obtenu par extrusion.

3. Méthode selon la revendication 1 ou 2,
**dans lequel** le film est un film multicouche ayant deux ou plusieurs couches,
**dans lequel** un côté est une couche anti-adhésion faite d'un plastique à base de polydiorganosiloxane.

4. Procédé selon l'une quelconque des revendications précédentes,
**dans lequel** le plastique soudable à base de polydiorganosiloxane est un alliage élastomère, dans lequel le polydiorganosiloxane est finement réparti dans une matrice formée d'un thermoplastique.

5. Procédé selon l'une quelconque des revendications précédentes,
**dans lequel** le film avec couche anti-adhésion est stratifié avec un matériau non plastique.

6. Procédé selon la revendication 5, **dans lequel** le matériau non plastique est un film en papier, en carton ou en métal.

7. Procédé selon l'une quelconque des revendications précédentes,
**dans lequel** le copolymère séquencé comprend au moins un allongeur de chaîne.

8. Emballage en forme de sac susceptible d'être obtenu par un procédé selon l'une quelconque des revendications 1 à 7,
**dans lequel** le côté intérieur de l'emballage en forme de sac a des propriétés anti-adhésion et est formé d'un plastique soudable à base de polydiorganosiloxane,
**dans lequel** l'emballage en forme de sac est formé par soudage du côté intérieur avec la couche anti-adhésion.

9. Utilisation d'une matière plastique soudable à base de polydiorganosiloxane pour la fabrication d'un emballage en forme de sac par soudage ou scellement,
**dans lequel** le plastique à base de polydiorganosiloxane est un copolymère séquencé avec un ou plusieurs blocs formés de polydiorganosiloxane et un ou plusieurs blocs formés d'un polymère dur choisi parmi les thermoplastiques,
**caractérisé en ce que** le bloc dur est choisi parmi le polyamide, le polyester, le polycarbonate, le polyuréthane, le polycaprolactone, la polyurée, le polycarbonate, le polystyrène, le polysulfone, la novolaque et leurs copolymères.
